# EUROPÄISCHE PATENTSCHRIFT

(11) **EP 2 703 659 B1**
(45) Veröffentlichungstag und Bekanntmachung des Hinweises auf die Patenterteilung: **16.07.2014**
(21) Anmeldenummer: 13003853.2
(22) Anmeldetag: 02.08.2013
(51) Int. Cl.: F16B 31/02, F16B 33/00, F16B 33/02

(54) **Befestigungsvorrichtung**
Attachment device
Dispositif de fixation

(30) Priorität: 27.08.2012 DE 102012107861
(43) Veröffentlichungstag der Anmeldung: 05.03.2014
(73) Patentinhaber: Fischer, Artur, 72178 Waldachtal (DE)
(72) Erfinder: Fischer, Artur, 72178 Waldachtal (DE)

(56) Entgegenhaltungen:
- EP-A2- 1 591 675
- DE-A1- 4 227 272
- GB-A- 2 183 769

## Beschreibung

Die Erfindung betrifft eine Befestigungsvorrichtung mit den Merkmalen des Oberbegriffs des Anspruchs 1.

Eine Befestigungsvorrichtung, die aus einer Schraube und einer Mutter aus Kunststoff besteht, ist aus der Offenlegungsschrift DE 196 15 205 A1 bekannt. Die Offenlegungsschrift zeigt eine Befestigungsvorrichtung mit einer Schraube aus Kunststoff, die einen Schraubenkopf und einen einbringseitig am Schraubenkopf angeordneten Schaft mit einem Außengewinde aufweist. Am Schraubenkopf ist eine Schlüsselfläche als Angriffsmittel für ein Drehwerkzeug, beispielsweise für einen Schraubenschlüssel, angeordnet. Die zur Befestigungsvorrichtung zugehörige Mutter ist ebenfalls aus Kunststoff hergestellt. Sie weist einen Schraubkanal mit einem zum Außengewinde der Schraube komplementären Innengewinde auf. Die Befestigungsvorrichtung dient zum Befestigen eines ersten Bauteils an einem zweiten Bauteil: Der Schaft der Schraube durchdringt die beiden Bauteile in einem hierfür in den Bauteilen vorgesehenen Bohrloch und liegt mit der Unterseite des Schraubenkopfs am ersten Bauteil an. Die Mutter liegt am zweiten Bauteil an und nimmt den Schaft der Schraube im Schraubkanal auf, wobei das Außengewinde in das Innengewinde eingreift, so dass die beiden Bauteile durch Eindrehen der Schraube in die Mutter gegeneinander verspannt werden können. Zum Verspannen wird über die Schlüsselfläche am Schraubenkopf ein Drehmoment auf die Schraube aufgebracht, wodurch im Schaft der Schraube Torsionsspannungen wirken. Im Schaft wirken durch das Verspannen zusätzlich Zugspannungen, die Befestigungsvorrichtung ist vorgespannt. Sind die im Schraubenschaft wirkenden Spannungen zu groß, kann es beim weiteren Anziehen der Schraube zum Bruch des Schafts kommen - die Schraube wird abgedreht, die Befestigungsvorrichtung versagt plötzlich und vollständig.

Aufgabe der Erfindung ist, eine Befestigungsvorrichtung vorzuschlagen, bei der ein Abdrehen, d. h. ein Bruch des Schafts der Schraube sicher verhindert wird.

Diese Aufgabe wird erfindungsgemäß durch eine Befestigungsvorrichtung mit den Merkmalen des Anspruchs 1 gelöst.

Die erfindungsgemäße Befestigungsvorrichtung umfasst eine Schraube und eine Mutter, die beide aus Kunststoff hergestellt sind. Die Schraube weist einen Schraubenkopf mit einem Angriffsmittel für ein Drehwerkzeug auf. Über das Angriffsmittel kann ein Drehmoment mit dem Drehwerkzeug, beispielsweise einem Schraubendreher oder einem Schraubenschlüssel, auf die Schraube aufgebracht werden. Das Angriffsmittel kann beispielsweise als Außen- oder Innensechskant oder als Torx-Aufnahme ausgebildet sein. In Einbringrichtung der Schraube vorn schließt sich an den Schraubenkopf ein sich in Längsrichtung erstreckender Schaft mit einem Außengewinde an. Der Schaft ist insbesondere im Wesentlichen zylindrisch, mit einem kegelförmigen vorderen Ende. Die Mutter weist eine sich in Längsrichtung erstreckende Durchgangsbohrung als Schraubkanal auf. Insbesondere ist ein Durchmesser der Durchgangsbohrung über die gesamte Längserstreckung im Wesentlichen gleich oder größer als ein Kerndurchmesser des Außengewindes der Schraube. Der Durchmesser der Durchgangsbohrung der Mutter ist insbesondere im Wesentlichen konstant. Im Schraubkanal ist ein zum Außengewinde komplementäres Innengewinde angeordnet. Insbesondere sind das Außengewinde der Schraube und das Innengewinde der Mutter derart gestaltet, dass die Mutter auf den Schaft der Schraube im Wesentlichen spielfrei aufgeschraubt werden kann. An der Mutter kann ebenfalls ein Mittel zur Übertragung eines Drehmoments bzw. zum Festhalten der Mutter mit einem Werkzeug angeordnet sein, beispielsweise in Form von Schlüsselflächen zu einem durch Formschluss drehfesten Ansetzen eines Schraubenschlüssels.

Kennzeichnend für die erfindungsgemäße Befestigungsvorrichtung ist, dass das Außengewinde der Schraube einen Gewindeaußendurchmesser aufweist, der maximal 15 % größer als der Gewindekerndurchmesser ist. Das bedeutet, dass eine Gewindehöhe im Verhältnis zum Durchmesser des Gewindekerns relativ gering ist. Insbesondere ist der Gewindeaußendurchmesser zudem minimal 10 % größer als der Gewindekerndurchmesser. Als besonders vorteilhaft hat sich ein Verhältnis von Gewindekerndurchmesser zu Gewindeaußendurchmesser von im Wesentlichen 0,88 erwiesen. Mit "Durchmesser" ist in diesem Zusammenhang der Durchmesser eines Umkreises gemeint, der das Gewinde bzw. den Gewindekern umschreibt, und dessen Radius orthogonal zur Längsachse der Befestigungsvorrichtung ist.

Durch die erfindungsgemäße Ausgestaltung der Befestigungsvorrichtung wird erreicht, dass beim Vorspannen der Befestigungsvorrichtung die Schraube in der Mutter durchdreht, bevor es zu einem Bruch des Schafts der Schraube kommt: Durch die im Verhältnis zum Gewindekerndurchmesser relativ geringe Gewindehöhe, und da sowohl die Schraube als auch die Mutter aus Kunststoff hergestellt sind, wird beim Erreichen eines bestimmten Drehmoments die Mutter und/oder die Gewindeflanke verformt, so dass das Außengewinde nicht mehr in das Innengewinde eingreift, sondern dass das Außengewinde der Schraube außer Eingriff vom Innengewinde der Mutter gelangt und die Schraube in der Mutter gedreht werden kann, ohne dass die Schraube axial gegenüber der Mutter bewegt wird. In diesem Zustand ist die Schraube durch Reibung des Außengewindes im Schraubkanal der Mutter und gegebenenfalls durch Formschluss des Teils des Außengewindes mit der Mutter gehalten, der in Einbringrichtung über den Schraubkanal der Mutter ragt. Nach einer vollständigen Umdrehung der Schraube oder einer Axialverschiebung der Schraube in der Mutter um einen Gewindegang gelangt das Außengewinde der Schraube wieder in Eingriff mit dem Innengewinde der Mutter, so dass die Schraube in der Mutter wieder formschlüssig Halt findet. Aufgrund der erfindungsgemäßen Ausgestaltung der Befestigungsvorrichtung wird somit ein Durchdrehen der Schraube in der Mutter bevor die Verbindungsvorrichtung überlastet wird, bewusst herbeigeführt, wodurch ein Bruch der Schraube und ein plötzliches Versagen der Befestigungsvorrichtung sicher vermieden werden.

Vorzugsweise ist die Gewindehöhe des Außengewindes im Wesentlichen nicht größer als 0,6 Millimeter, insbesondere im Wesentlichen gleich 0,3 Millimeter, so das auch bei Schrauben mit einem relativ großen Durchmesser sichergestellt ist, dass es beim Erreichen eines bestimmten Drehmoments zu einem Durchdrehen der Schraube in der Mutter und nicht zu einem Bruch der Schraube kommt.

Als vorteilhaft hat sich erwiesen, wenn das Außengewinde ein Spitzgewinde mit einem Flankenwinkel von insbesondere 60° aufweist, wobei die Erfindung nicht auf diese spezielle Gewindeform oder den Flankenwinkel beschränkt ist. Zudem hat sich ein relativ geringer Durchmesser des Außengewindes der Schraube von maximal 10 Millimeter, insbesondere von maximal 6 Millimeter als vorteilhaft erwiesen. Auch hier ist die Erfindung aber nicht auf diese Durchmesser beschränkt.

Weiterhin ist bevorzugt, dass die Mutter und/oder die Schraube aus einem faserverstärkten Polyamid hergestellt sind. Durch die Verwendung von faserverstärktem Polyamid wird erreicht, dass das Außengewinde der Schraube stabil genug ist, um auch mit einer geringen Flankenhöhe ausreichend Kräfte auf das Innengewinde der Mutter übertragen zu können. Zudem wird durch die Wahl dieses relativ festen Werkstoffs verhindert, dass das Außengewinde beim Durchdrehen der Schraube in der Mutter vollständig abschert. Die aus faserverstärktem Polyamid hergestellte Mutter ist ausreichend fest um die Kräfte von der Schraube aufzunehmen, aber sie ist trotzdem in ausreichendem Maße verformbar, beispielsweise in radialer Richtung dehnbar. Die Faserverstärkung kann beispielsweise durch die Zugabe von Glas- oder Kohlenstofffasern erfolgen.

In einer bevorzugten Ausgestaltungsform der erfindungsgemäßen Befestigungsvorrichtung ist der Faseranteil beim Material der Schraube größer als der Faseranteil beim Material der Mutter. Somit ist die Schraube, speziell das Außengewinde, ausreichend fest, die Mutter dagegen ausreichend verformbar. Vorzugsweise ist die Mutter aus glasfaserverstärktem Polyamid mit einem Gewichtsanteil der Glasfasern von im Wesentlichen 30% hergestellt. Weiterhin ist bevorzugt, dass die Schraube aus glasfaserverstärktem Polyamid mit einem Gewichtsanteil der Glasfasern von im Wesentlichen 50% hergestellt ist. Eine derartige Materialwahl für die erfindungsgemäße Befestigungsvorrichtung hat sich als besonders vorteilhaft erwiesen.

Eine weitere bevorzugte Ausgestaltungsform der erfindungsgemäßen Befestigungsvorrichtung weist eine Schraube mit einem Außengewinde auf, dessen Steigung 25% bis 60%, insbesondere 40% bis 60%, insbesondere im Wesentlichen 50% des Gewindedurchmessers des Außengewindes entspricht. Durch diese relativ große Gewindesteigung kann die Schraube schnell in die Mutter eingedreht werden, was die Montagezeit der Befestigungsvorrichtung verringert. Zudem wird durch die große Steigung das Durchdrehen der Schraube in der Mutter erleichtert.

Vorzugsweise ist die Mutter der erfindungsgemäßen Befestigungsvorrichtung derart gestaltet, dass sich das Innengewinde in Längsrichtung über mindestens vier Gewindesteigungen des Außengewindes erstreckt, so dass die Schraube in der Mutter einen ausreichenden Halt findet, um auch große Kräfte über das Außenund das Innengewinde von der Schraube auf die Mutter zu übertragen.

Weiterhin ist bevorzugt, dass an der Mutter ein Vorspannelement angeordnet ist. Wird die erfindungsgemäße Befestigungsvorrichtung zum Verbinden eines ersten Bauteils mit einem zweiten Bauteil verwendet, so ist das Vorspannelement zwischen der Mutter und dem dem Schraubenkopf abgewandten zweiten Bauteil angeordnet. Ist kein Vorspannelement vorhanden, so ist das zum Verspannen der Bauteile auf die Schraube aufzubringende Drehmoment zunächst gering, bis die Mutter am zweiten Bauteil anliegt, wodurch das aufzubringende Drehmoment und damit die Vorspannkraft, die beim Verspannen auf den Schaft der Schraube wirkt, schon bei einer relativ geringen Drehung der Schraube stark ansteigt, was insbesondere bei einer relativ großen Gewindesteigung des Außengewindes der Fall ist. Das Vorspannelement ist derart gestaltet, dass es vor der Mutter am zweiten Bauteil anliegt und dass das zum Verspannen notwendige Drehmoment und die Vorspannkraft nach und nach durch die stetige Verformung des Vorspannelements ansteigen. Beim Eindrehen der Schraube wird das Vorspannelement von der Mutter gegen das zweite Bauteil gedrückt und verformt. Das Vorspannelement kann beispielsweise als Spannscheibe oder schraubenfederartig ausgebildet sein, so dass sich beim Eindrehen der Schraube in die Mutter die Vorspannkraft und somit das aufzubringende Drehmoment nach und nach erhöht. Dies ist insbesondere bei druckempfindlichen Baustoffen, beispielsweise bei Glas, von Vorteil. Ohne Vorspannelement besteht bei diesen Baustoffen die Gefahr, dass durch eine geringe Drehung der Schraube die Verspannung und damit der Druck auf die Bauteile so stark erhöht werden, dass es zum Bruch der Bauteile kommt. Durch das Vorspannelement wird dies verhindert, da ein Anwender beim Einschrauben der Schraube durch die stetige Erhöhung des Drehmoments durch die Verformung des Vorspannelements eine Rückmeldung erhält, wie stark die Vorspannung und damit der Druck auf den Baustoff ist. Das Vorspannelement kann insbesondere einstückig mit der Mutter, beispielsweise als Spritzgussteil, hergestellt sein.

Die Erfindung wird nachfolgend anhand von zwei in den Figuren dargestellten Ausführungsbeispielen näher erläutert.

Es zeigen:
- Figur 1: eine Schraube einer ersten erfindungsgemäßen Befestigungsvorrichtung in einer teilweise geschnittenen Seitenansicht;
- Figur 2: eine Mutter der ersten erfindungsgemäßen Befestigungsvorrichtung in einer Seitenansicht;
- Figur 3: einen Schnitt durch die Mutter der Figur 2 entlang der Achse III-III;
- Figur 4: einen Schnitt durch eine Befestigungsanordnung mit zwei Bauteilen, die mit der ersten erfindungsgemäßen Befestigungsvorrichtung aneinander befestigt und gegeneinander verspannt sind;
- Figur 5: eine Mutter mit Vorspannelement einer zweiten erfindungsgemäßen Befestigungsvorrichtung in einer Seitenansicht;
- Figur 6: einen Schnitt durch die Mutter der Figur 5 entlang der Achse VI-VI; und
- Figur 7: einen Schnitt durch die zweite Befestigungsanordnung mit zwei Bauteilen, die mit der zweiten erfindungsgemäßen Befestigungsvorrichtung aneinander befestigt und gegeneinander verspannt sind.

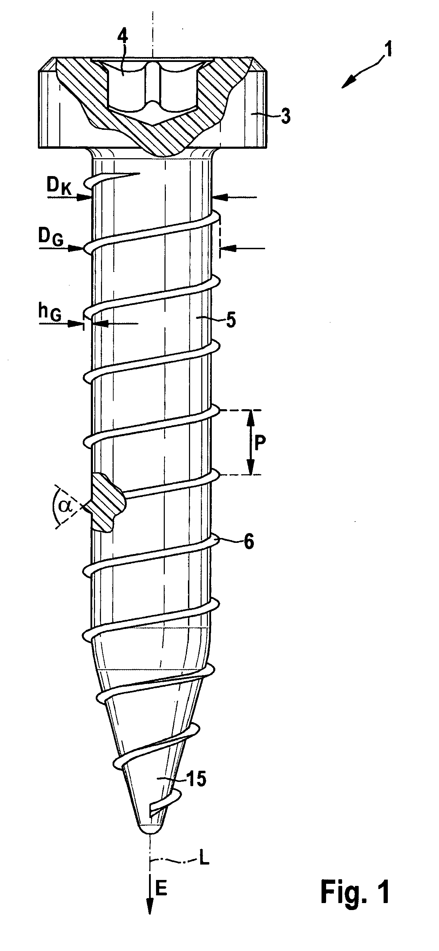

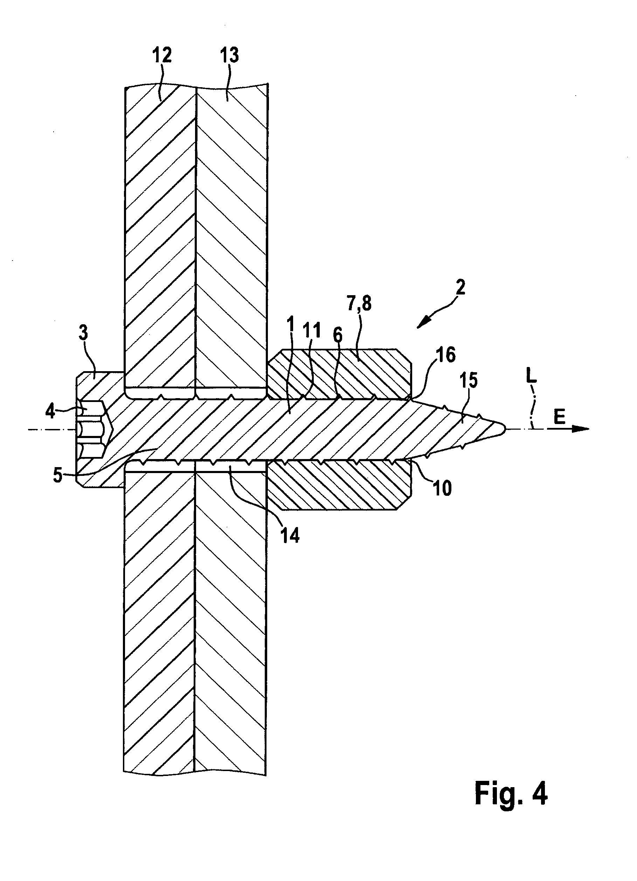

In Figur 1 ist eine Schraube 1 einer ersten erfindungsgemäßen Befestigungsvorrichtung 2 dargestellt, wie sie in Figur 4 zu sehen ist. Die Schraube 1 weist einen zylinderförmigen Schraubenkopf 3 mit einem Angriffsmittel 4 für ein nicht dargestelltes Drehwerkzeug auf. Das Angriffsmittel 4 ist als Innenstern in Form einer Torx-Aufnahme ausgeführt. An den Schraubenkopf 3 schließt sich in Einbringrichtung E ein gegenüber dem Schraubenkopf 3 im Durchmesser reduzierter zylinderförmiger Schaft 5 an, der sich entlang einer Längsachse L stiftartig erstreckt. Das vordere, dem Schraubenkopf 3 ferne Ende 15 des Schafts 5 weicht von der Zylinderform ab und ist kegelförmig, wobei der Durchmesser des Kegels sich in Einbringrichtung E verringert. Am Schaft 5 ist ein Außengewinde 6 angeordnet. Das Außengewinde 6 ist als Spitzgewinde mit einem Flankenwinkel α von 60° ausgeführt. Das Außengewinde 6 der Schraube 1 weist einen Gewindeaußendurchmesser D_{G} von 5 Millimetern auf, während der Gewindekerndurchmesser D_{K} 4,4 Millimeter beträgt. Die Gewindehöhe h_{G} des Außengewindes 6 beträgt 0,3 Millimeter. Die Steigung P des Außengewindes 6 beträgt 2,5 Millimeter. Somit weist die Schraube 1 einen relativ dicken Gewindekern auf, d. h. einen großen Gewindekerndurchmesser D_{K} und eine niedrige Gewindehöhe h_{G}. Der Gewindeaußendurchmesser D_{G} ist mit 5 Millimetern um 13,6% größer als der Gewindekerndurchmesser D_{K} mit 4,4 Millimetern. Das Verhältnis von Gewindekerndurchmesser D_{K} zu Gewindeaußendurchmesser D_{G} beträgt somit 0,88. Die Steigung P des Außengewindes 6 beträgt 50% das Gewindeaußendurchmessers D_{G} des Außengewindes 6. Die Schraube 1 ist als Spritzgussteil aus einem glasfaserverstärkten Polyamid mit einem Gewichtsanteil der Glasfasern von 50% hergestellt. Die Verwendung dieses belastbaren Werkstoffs und der große Gewindekerndurchmesser D_{K} bewirken, dass der Schaft 5 der Schraube 1 stabil und insbesondere torsionssteif ist. Zudem können auf Grund des belastbaren Werkstoffs relativ große Kräfte über das Außengewinde 6 mit der relativ geringen Gewindehöhe h_{G} übertragen werden.

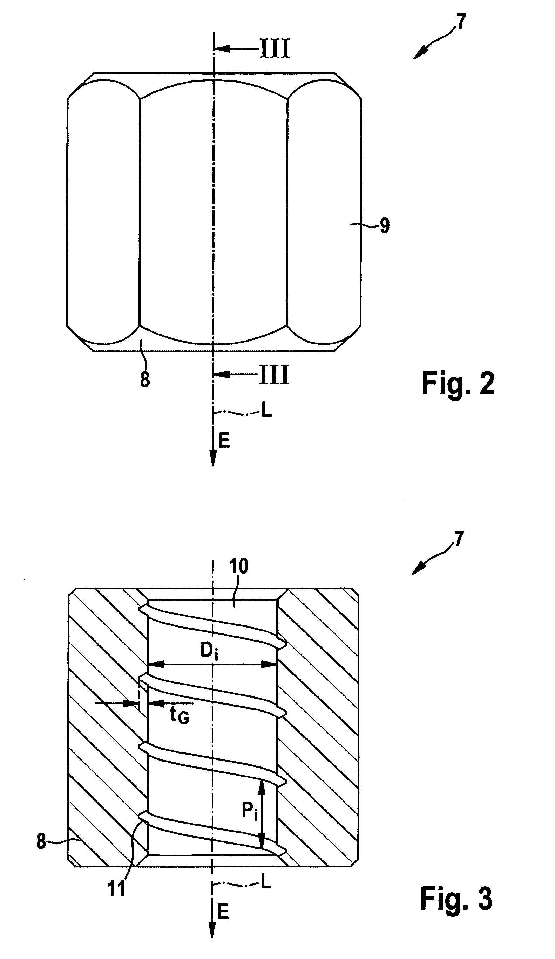

Die Figuren 2 und 3 zeigen eine Mutter 7, die mit der Schraube 1 die in Figur 4 dargestellte erste erfindungsgemäße Befestigungsvorrichtung 2 bildet. Die Mutter 7 weist einen Sechskant als Grundkörper 8 auf, an dessen Mantelfläche sechs gleich große Schlüsselflächen 9 als Mittel zur Übertragung eines Drehmoments bzw. zum Festhalten der Mutter 7 mit einem nicht dargestellten Werkzeug, beispielsweise einem Schraubenschlüssel, angeordnet sind. Die Mutter 7 weist eine sich in Längsrichtung symmetrisch zur Längsachse L erstreckende Durchgangsbohrung 10 als Schraubkanal auf. In der Durchgangsbohrung 10 ist ein Innengewinde 11 angeordnet, das zum Außengewinde 6 der Schraube 1 komplementär ist, d. h., dass der Innendurchmesser Dᵢ, die Steigung Pᵢ und die Gewindetiefe t_{G} des Innengewindes 11 im Wesentlichen dem Gewindekerndurchmesser D_{K}, der Steigung P und der Gewindehöhe h_{G} des Außengewindes 6 entsprechen, so dass die Schraube 1 im Wesentlichen spielfrei in die Mutter 7 eingedreht werden kann. Der Innendurchmesser Dᵢ der Durchgangsbohrung 10 ist über die Länge der Durchgangsbohrung 10 im Wesentlichen konstant. Das Innengewinde 11 erstreckt sich in Längsrichtung über vier Gewindesteigungen Pᵢ, die der Gewindesteigung P des Außengewindes 6 entsprechen. Die Mutter 7 ist ebenfalls als Spritzgussteil aus einem glasfaserverstärkten Polyamid hergestellt. Allerdings ist der Faseranteil beim Material der Mutter 7 kleiner als beim Material der Schraube 1. Beim Material, aus dem die Mutter 7 hergestellt ist, liegt der Gewichtsanteil der Glasfasern bei nur 30%. Aufgrund der Wahl des Materials sind die Gewindeflanken des Innengewindes 11 fest genug, um auch große Kräfte von der Schraube 1 auf die Mutter 7 und umgekehrt zu übertragen. Das Material ist aber aufgrund des geringeren Faseranteils elastisch genug, um eine Verformung der Mutter 7 insbesondere quer zur Längsachse L, d. h. eine Aufweitung der Mutter 7, zu ermöglichen, so dass das Außengewinde 6 der Schraube 1 vom Innengewinde 11 der Mutter 7 freikommt, bevor die Schraube 1, insbesondere ihr Schaft 5 bricht oder auch ein anderes Element der Befestigungsvorrichtung 2 beschädigt oder zerstört wird, wenn das über das Angriffsmittel 4 aufgebrachte Drehmoment groß genug ist und eine axiale Relativbewegung der Mutter 7 zur Schraube 1 behindert wird, wie dies in Figur 4 dargestellt ist.

In Figur 4 ist eine Befestigungsanordnung mit der ersten erfindungsgemäßen Befestigungsvorrichtung 2 sowie einem dem Schraubenkopf 4 zugewandten ersten Bauteil 12 und einem der Mutter 7 zugewandten zweiten Bauteil 13 dargestellt. Bei dem ersten Bauteil 12 handelt es sich um eine Kunststoffplatte, die an dem zweiten Bauteil 13, einem Flachstahl, befestigt ist. Zum Befestigen des ersten Bauteils 12 am zweiten Bauteil 13 wird die Schraube 1 in ein Bohrloch 14 gesteckt, das die beiden Bauteile 12, 13 durchdringt. Auf den Schaft 5 der Schraube 1 wird die Mutter 7 aufgeschraubt, wobei das Außengewinde 6 in das Innengewinde 11 der Mutter 7 eingreift. Durch Drehen der Schraube 1 relativ zur Mutter 7 wird der Abstand zwischen dem Schraubenkopf 3 und der Mutter 7 soweit verringert, bis der Schraubenkopf 3 am ersten Bauteil 12 und die Mutter 7 am zweiten Bauteil 13 anliegt. Durch weiteres Drehen der Schraube 1 relativ zur Mutter 7 werden die beiden Bauteile 12, 13 gegeneinander verspannt, wobei in der Schraube 1 Zugkräfte entstehen und der Schaft 5 der Schraube 1 elastisch gedehnt wird, so dass die Befestigungsvorrichtung 2 vorgespannt ist. Durch die erfindungsgemäße Auslegung der Befestigungsvorrichtung 2 kommt das Außengewinde 6 beim weiteren Drehen der Schraube 1 relativ zur Mutter 7 aus dem Innengewinde 11 frei, so dass die Schraube 1 in der Mutter 7 durchdreht, wodurch ein Bruch des Schafts 5 auf Grund hoher Torsions- und Zugspannungen verhindert wird. Wenn die Schraube 1 nach dem Überschreiten eines bestimmten Drehmoments in der Mutter 7 durchdreht, wird die Mutter 7 weiterhin durch die Reibung zwischen dem Außengewinde 6 und der Durchgangsbohrung 10 sowie durch Formschluss des freien Teils 16 des Außengewindes 6, der in Einbringrichtung E vorn an der Mutter 7 anliegt, auf dem Schaft 5 der Schraube 1 gehalten. Wird die Schraube 1 um eine volle Umdrehung gegenüber der Mutter 7 gedreht, so liegt das Außengewinde 6 wieder im Innengewinde 11 und die Mutter 7 kann erneut gegen das zweite Bauteil 13 verspannt werden. Die Ausbildung des Außengewindes 6 mit seiner geringen Gewindehöhe h_{G} und die Wahl der Materialien für die Schraube 1 und der Mutter 7 verhindern, dass beim Durchdrehen das Außengewinde 6 vollständig abschert und somit zerstört wird. Durch den hohen Faseranteil des Materials der Schraube 1 ist das Außengewinde 6 härter als das Material der Mutter 7, das durch den Druck der Flanken des Außengewindes 6 verdrängt und elastisch verformt wird. Mit der erfindungsgemäßen Befestigungsvorrichtung 2 können die beiden Bauteile 12, 13 sicher miteinander verbunden und gegeneinander verspannt werden. Ein Abdrehen der Schraube 1 wird durch die erfindungsgemäße Ausgestaltung der Befestigungsvorrichtung 2 verhindert.

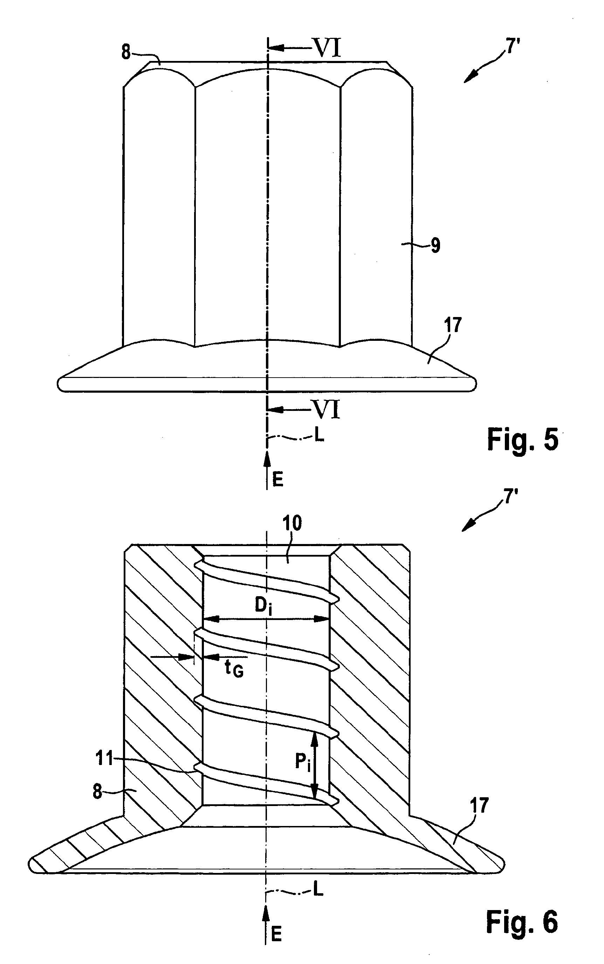

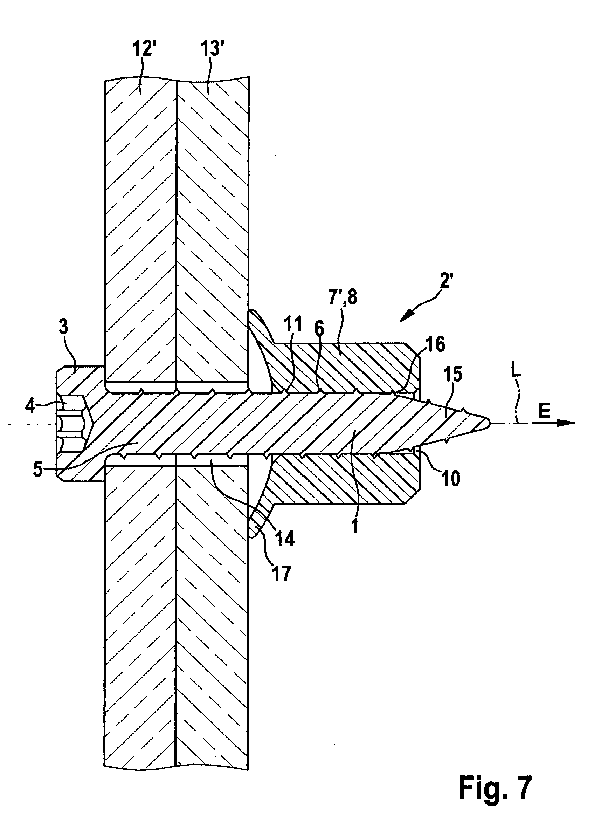

In den Figuren 5 und 6 ist eine weitere Mutter 7' dargestellt, die mit der aus der Figur 1 bekannten Schraube 1 eine zweite erfindungsgemäße Befestigungsvorrichtung 2' bildet, wie sie in Figur 7 dargestellt ist. Um Wiederholungen zu vermeiden, werden nur die Unterschiede zu der der in den Figuren 2, 3 und 4 dargestellten Mutter 7 erläutert: An der in den Figuren 5, 6 und 7 dargestellte Mutter 7' ist an ihrem in Einbringrichtung E hinteren Ende eine konkav gewölbte Scheibe als Vorspannelement 17 angeordnet. Die Mutter 7' ist einstückig mit dem Vorspannelement 17 als Spritzgussteil hergestellt. Das Vorspannelement 17 ist gegenüber dem Grundkörper 8 der Mutter 7' im Durchmesser vergrößert. Wird die Schraube 1 zum Verbinden druckempfindlicher Bauteile 12', 13', die aus Glas bestehen, in die Mutter 7' eingeschraubt, wie dies in Figur 7 dargestellt ist, so liegt zunächst das Vorspannelement 17 am zweiten Bauteil 13' an, wodurch sich das zum Eindrehen der Schraube 1 in die Mutter 7' notwendige Drehmoment leicht erhöht, was vom Anwender wahrgenommen wird. Das Vorspannelement 17 wirkt beim weiteren Eindrehen als Tellerfeder, so dass sich das zum Eindrehen der Schraube 1 in die Mutter 7' notwendige Drehmoment nach und nach erhöht, je weiter der Schraubenkopf 4 zur Mutter 7' hin bewegt wird. Dabei wird das zunächst gewölbte Vorspannelement 17 stetig flacher gedrückt, bis schlussendlich eine flache Scheibe entsteht und die Mutter 7' am zweiten Bauteil 13' anliegt. Der Anwender merkt die Zunahme des Drehmoments und kann so leicht feststellen, wie stark die beiden Bauteile 12', 13' gegeneinander verspannt sind. Insbesondere dann, wenn eines der oder beide Bauteile 12', 13' aus druckempfindlichem, brüchigem Material, wie beispielsweise Glas, bestehen, wird durch das Vorspannelement 17 verhindert, dass sich das Drehmoment und die Vorspannung der Schraube beim Anlegen der Mutter 7' an dem zweiten Bauteil 13' plötzlich stark erhöht, wie dies bei der in Figur 4 dargestellten Befestigungsanordnung der Fall ist. Eine starke Erhöhung der Vorspannung des Schafts 5 würde in den Bauteilen 12', 13' im Bereich des Schraubenkopfs 4 und der Mutter 7' eine große Druckspannung verursachen, was bei druckempfindlichen Materialien zur Zerstörung der Bauteile 12', 13' führen kann. Da der Anwender bei Verwendung der zweiten erfindungsgemäßen Befestigungsvorrichtung 2' durch das Vorspannelement 17 die Zunahme der Vorspannung des Schafts 4 direkt durch die Zunahme des zum Drehen der Mutter 7' notwendigen Drehmoments fühlt, kann er die Vorspannung leicht anpassen, wodurch eine Zerstörung druckempfindlicher Bauteile 12', 13' verhindert wird.

### Bezugszeichenliste

- 1: Schraube
- 2, 2': Befestigungsvorrichtung
- 3: Schraubenkopf
- 4: Angriffsmittel
- 5: Schaft
- 6: Außengewinde
- 7, 7': Mutter
- 8: Grundkörper der Mutter 7, 7'
- 9: Schlüsselfläche
- 10: Durchgangsbohrung
- 11: Innengewinde
- 12, 12': erstes Bauteil
- 13, 13': zweites Bauteil
- 14: Bohrloch
- 15: vorderes Ende des Schafts 5
- 16: freies Teil des Außengewindes 6
- 17: Vorspannelement
- D_{G}: Gewindedurchmesser
- D_{K}: Gewindekerndurchmesser
- Dᵢ: Innendurchmesser
- E: Einbringrichtung
- h_{G}: Gewindehöhe des Außengewindes 6
- L: Längsachse
- P: Steigung des Außengewindes 6
- Pᵢ: Steigung des Innengewindes 11
- t_{G}: Gewindetiefe des Innengewindes 11
- α: Flankenwinkel

## Patentansprüche

1. Befestigungsvorrichtung (2, 2'), umfassend eine Schraube (1) und eine Mutter (7, 7'),
- wobei die Schraube (1) einen Schraubenkopf (3) mit einem Angriffsmittel (4) für ein Drehwerkzeug und einen sich in Längsrichtung erstreckenden Schaft (5) mit einem Außengewinde (6) aufweist,
- wobei die Mutter (7, 7') eine sich in Längsrichtung erstreckende Durchgangsbohrung (10) als Schraubkanal mit einem zum Außengewinde (6) komplementären Innengewinde (11) aufweist, und
- wobei die Schraube (1) und die Mutter (7, 7') aus Kunststoff hergestellt sind,
**dadurch gekennzeichnet,**
**dass** das Außengewinde (6) der Schraube (1) einen Gewindeaußendurchmesser (D_{G}) aufweist, der maximal 15% größer als ein Gewindekerndurchmesser (D_{K}) ist.

2. Befestigungsvorrichtung nach Anspruch 1, **dadurch gekennzeichnet, dass** die Gewindehöhe(h_{G}) des Außengewindes (6) im Wesentlichen nicht größer als 0,6 mm ist.

3. Befestigungsvorrichtung nach Anspruch 1 oder 2, **dadurch gekennzeichnet, dass** die Mutter (7, 7') aus faserverstärktem Polyamid hergestellt ist.

4. Befestigungsvorrichtung nach einem der Ansprüche 1 bis 3, **dadurch gekennzeichnet, dass** die Schraube (1) aus faserverstärktem Polyamid hergestellt ist.

5. Befestigungsvorrichtung nach Anspruch 3 und 4, **dadurch gekennzeichnet, dass** beim Material der Schraube (1) der Faseranteil größer als der Faseranteil beim Material der Mutter (7, 7') ist.

6. Befestigungsvorrichtung nach Anspruch 1 bis 5, **dadurch gekennzeichnet, dass** die Mutter (7, 7') aus glasfaserverstärktem Polyamid mit einem Gewichtsanteil der Glasfasern von im Wesentlichen 30% hergestellt ist.

7. Befestigungsvorrichtung nach Anspruch 1 bis 6, **dadurch gekennzeichnet, dass** die Schraube (1) aus glasfaserverstärktem Polyamid mit einem Gewichtsanteil der Glasfasern von im Wesentlichen 50% hergestellt ist.

8. Befestigungsvorrichtung nach einem der Ansprüche 1 bis 7, **dadurch gekennzeichnet, dass** die Steigung (P) des Außengewindes (6) 25% bis 60%, insbesondere 40% bis 60%, insbesondere im Wesentlichen 50% des Gewindeaußendurchmessers (D_{G}) des Außengewindes (6) entspricht.

9. Befestigungsvorrichtung nach einem der Ansprüche 1 bis 8, **dadurch gekennzeichnet, dass** sich das Innengewinde (11) in Längsrichtung über mindestens vier Gewindesteigungen (P) des Außengewindes (6) erstreckt.

10. Befestigungsvorrichtung nach einem der Ansprüche 1 bis 9, **dadurch gekennzeichnet, dass** an der Mutter (7') ein Vorspannelement (17) angeordnet ist.

## Claims

1. Fixing device (2, 2'), comprising a screw (1) and a nut (7, 7'),
- wherein the screw (1) has a screw head (3) having an application means (4) for a rotary tool and a shank (5) extending in the longitudinal direction, which shank has an external thread (6),
- wherein the nut (7, 7') has a through-bore (10) extending in the longitudinal direction as screw channel, which through-bore has an internal thread (11) complementary to the external thread (6), and
- wherein the screw (1) and the nut (7, 7') are manufactured from plastics material,
**characterised in that**
the external thread (6) of the screw (1) has a thread external diameter (D_{G}) that is a maximum of 15 % greater than a thread core diameter (D_{K}).

2. Fixing device according to claim 1, **characterised in that** the thread height (h_{G}) of the external thread (6) is substantially not greater than 0.6 mm.

3. Fixing device according to claim 1 or 2, **characterised in that** the nut (7, 7') is manufactured from fibre-reinforced polyamide.

4. Fixing device according to any one of claims 1 to 3, **characterised in that** the screw (1) is manufactured from fibre-reinforced polyamide.

5. Fixing device according to claims 3 and 4, **characterised in that** in the material of the screw (1) the fibre content is greater than the fibre content in the material of the nut (7, 7').

6. Fixing device according to claims 1 to 5, **characterised in that** the nut (7, 7') is manufactured from glass-fibre-reinforced polyamide having a content by weight of glass fibres of substantially 30 %.

7. Fixing device according to claims 1 to 6, **characterised in that** the screw (1) is manufactured from glass-fibre-reinforced polyamide having a content by weight of glass fibres of substantially 50 %.

8. Fixing device according to any one of claims 1 to 7, **characterised in that** the pitch (P) of the external thread (6) corresponds to from 25 % to 60 %, especially from 40 % to 60 %, especially substantially 50 %, of the thread external diameter (D_{G}) of the external thread (6).

9. Fixing device according to any one of claims 1 to 8, **characterised in that** the internal thread (11) extends in the longitudinal direction over at least four thread pitches (P) of the external thread (6).

10. Fixing device according to any one of claims 1 to 9, **characterised in that** a pretensioning element (17) is arranged on the nut (7').

## Revendications

1. Dispositif de fixation (2, 2'), comprenant une vis (1) et un écrou (7, 7'),
- sachant que la vis (1) présente une tête de vis (3) dotée d'un moyen d'attaque (4) pour un outil tournant, et un corps (5) s'étendant en direction longitudinale et doté d'un filetage extérieur (6),
- sachant que l'écrou (7, 7') présente un perçage traversant (10) s'étendant en direction longitudinale comme passage de vis doté d'un filetage intérieur (11) complémentaire du filetage extérieur (6),
- et sachant que la vis (1) et l'écrou (7, 7') sont fabriqués en matière plastique,
**caractérisé en ce que** le filetage extérieur (6) de la vis (1) présente un diamètre extérieur de filet (D_{G}) qui est au maximum supérieur de 15% à un diamètre de fond de filet (D_{K}).

2. Dispositif de fixation selon la revendication 1, **caractérisé en ce que** la hauteur de filet (h_{G}) du filetage extérieur (6) n'est sensiblement pas supérieure à 0,6 mm.

3. Dispositif de fixation selon la revendication 1 ou 2, **caractérisé en ce que** l'écrou (7, 7') est fabriqué en polyamide renforcé par fibres.

4. Dispositif de fixation selon l'une des revendications 1 à 3, **caractérisé en ce que** la vis (1) est fabriquée en polyamide renforcé par fibres.

5. Dispositif de fixation selon les revendications 3 et 4, **caractérisé en ce que** la part de fibres du matériau de la vis (1) est plus élevée que la part de fibres du matériau de l'écrou (7, 7').

6. Dispositif de fixation selon l'une des revendications 1 à 5, **caractérisé en ce que** l'écrou (7, 7') est fabriqué en polyamide renforcé par des fibres de verre, avec une part en poids des fibres de verre sensiblement égale à 30%.

7. Dispositif de fixation selon l'une des revendications 1 à 6, **caractérisé en ce que** la vis (1) est fabriquée en polyamide renforcé par des fibres de verre, avec une part en poids des fibres de verre sensiblement égale à 50%.

8. Dispositif de fixation selon l'une des revendications 1 à 7, **caractérisé en ce que** le pas (P) du filetage extérieur (6) correspond à 25% à 60%, notamment 40% à 60% et en particulier sensiblement 50% du diamètre extérieur de filet (D_{G}) du filetage extérieur (6).

9. Dispositif de fixation selon l'une des revendications 1 à 8, **caractérisé en ce que** le filetage intérieur (11) s'étend en direction longitudinale sur au moins quatre pas de filetage (P) du filetage extérieur (6).

10. Dispositif de fixation selon l'une des revendications 1 à 9, **caractérisé en ce qu'**un élément de précontrainte (17) est disposé sur l'écrou (7').
